# EUROPÄISCHE PATENTSCHRIFT

(11) **EP 2 129 807 B1**
(45) Veröffentlichungstag und Bekanntmachung des Hinweises auf die Patenterteilung: **12.09.2012**
(21) Anmeldenummer: 08701060.9
(22) Anmeldetag: 10.01.2008
(51) Int. Cl.: C21C 7/00, C21C 5/52, C21C 5/54

(54) **VERFAHREN ZUR REDUKTION EINER HOCHCHROMHALTIGEN SCHLACKE IN EINEM ELEKTROLICHTBOGENOFEN**
METHOD FOR THE REDUCTION OF A SLAG HAVING A HIGH DEGREE OF CHROMIUM IN AN ELECTRIC ARC FURNACE
PROCÉDÉ DE RÉDUCTION D'UN LAITIER À HAUTE TENEUR EN CHROME DANS UN FOUR À ARC ÉLECTRIQUE

(30) Priorität: 09.02.2007 DE 102007006529
(43) Veröffentlichungstag der Anmeldung: 09.12.2009
(73) Patentinhaber: SMS Siemag AG, 40237 Düsseldorf (DE)
(72) Erfinder: REICHEL, Johann, 40489 Düsseldorf (DE); ROSE, Lutz, 47259 Duisburg (DE)
(74) Vertreter: Klüppel, Walter
(86) Internationale Anmeldenummer: PCT/EP2008/000138
(87) Internationale Veröffentlichungsnummer: WO 2008/095575

(56) Entgegenhaltungen:
- EP-A- 0 655 508
- EP-A- 0 829 545
- WO-A-00/14287
- WO-A-2004/104232
- DE-A1-102006 004 532

## Beschreibung

Die Erfindung betrifft ein Verfahren zur Reduktion einer bei der Herstellung von Rostfreistahl in einem Elektrolichtbogenofen auf der Stahlschmelze befindlichen hochchromhaftigen Schlacke, bei dem der Schlacke Formlinge wie Pellets oder Briketts zuchargiert werden, deren Inhaltstoffe mit den Metalloxiden der Schlacke reduzierend reagieren.

Beim Betreiben von Elektrolichtbogenöfen werden eingefüllte Fest-Materialien, vor allem Schrott und Legierungen mit den Lichtbögen der Elektroden, die von oben in das Ofengefäß ragen, aufgeschmolzen. Hierbei erfüllt die Schlacke neben ihrer Primärfunktion, der Entfernung von unerwünschten Bestandteilen aus der Schmelze, eine Schutzfunktion, da sie den Raum zwischen den Elektrodenenden und der Metalloberfläche teilweise ausfüllt und die Feuerfest-Ausmauerung des Ofens vor der Strahlungsenergie des Elektrolichtbogens schützt. Diese Schutzfunktion der Schlacke lässt sich dadurch verbessern, dass durch geeignete Verfahren ein Aufschäumen der Schlacke herbeigeführt wird.

Hierzu schlägt die EP 0 829 545 B1 ein Verfahren zur Herstellung einer Schaumschlacke auf schmelzflüssigem, rostfreiem Stahl in einem Elektroofen vor, wobei in die Schlacke ein Pulver mit Hilfe eines-Injektionsmediums, beispielsweise Stickstoff, eingeführt wird, das sich aus einem Metalloxid, entweder Zinkoxid oder Bleioxid, und Kohlenstoff zusammensetzt. Das in dem Pulver enthaltene Oxid wird reduziert, indem es mit dem Kohlenstoff reagiert. Hierbei werden in der Schlacke Blasen gebildet, die im Wesentlichen aus Kohlenmonoxid bestehen und die die Schlacke aufschäumen lassen. Aufgrund der mit der Pulverform verbundenen relativ großen Oberfläche kommt es zu einer kurzen, heftigen Reaktion mit der Schlacke, die zudem örtlich begrenzt in der Nähe der Einspritz- bzw. der Einblasvorrichtung im Schmelzbad stattfindet.

Um die Nachteile des Einbringens von pulverförmigen Stoffen zu vermeiden, wird in der WO 2004/104232 A1 vorgeschlagen, die zum Aufschäumen der Schlacke verwendeten Materialien, ein Gemisch aus Metalloxid und Kohlenstoff, als gepresste Formteile in den Elektroofen zu chargieren. Die Dichte dieser Formteile ist dabei so eingestellt, dass sie in der Schlacke und hier vorzugsweise nahe der Phasengrenze Schmelze/Schlacke schwimmen.

Bei der Herstellung von Rostfreistahl bildet sich während des Einschmelzens des Fest-Materials im Elektrolichtbogenofen eine Schlacke aus, die einen hohen Anteil von Metalloxiden, vor allem von Chromoxid beinhaltet. Die Konzentration des Chromoxids erreicht dabei oft Werte höher als 30%. Derartige Schlacken können bisher aufgrund ihrer Zusammensetzung nicht in erwünschtem Maße reduziert werden.

Um den unerwünschten Wertstoffverlust, bedingt durch den hohen Chromoxidgehalt in der Schlacke zu minimieren, besteht die Aufgabe der Erfindung darin, ein Verfahren zur Schlackenreduktion einer Rostfreistahlschmelze anzugeben, in der die positiven Erfahrungen der Schlackenaufschäumung mit der Zugabe gepresster Formteile in den Elektrolichtbogenofen mit einfließen.

Die gestellte Aufgabe wird mit den kennzeichnenden Merkmalen des Anspruchs 1 dadurch gelöst, dass die in den Elektrolichtbogenofen chargierten Pellets bzw. Briketts aus einem definierten Gemisch aus einem Eisenträger als Balastmaterial, aus Kohlenstoff bzw. Kohlenstoff und Silizium als Reduktionsmittel sowie einem Bindematerial bestehen und dass die Pellets bzw. Briketts unter der Schlackenschicht chemisch mit den Metalloxiden der Schlacke, insbesondere mit dem enthaltenden Chromoxid, reduzierend reagieren, wobei die entstehenden Reaktionsgase, hauptsächlich Kohlenmonoxid, ein Schlackeaufschäumen unterstützen.

Vorteilhafte Ausgestaltungen der Erfindung sind in den Unteransprüchen angegeben.

Die Reduktion des Chromoxids der Schlacke verläuft dabei nach der Reaktion

(Cr₂O₃) + 3[C] = 2[Cr] + 3{CO}.

Sie ersetzt in hohem Anteil die klassische Reduktion mit Silizium d. h.

(Cr₂O₃) + 3[Si] = 4[Cr] + 3{SiO₂}

und vermindert die Kosten der Reduktion. Zusätzlich wird die Energiebilanz verbessert, da verminderte Mengen an Kalk zwecks des Basizitätsausgleichs benötigt werden.

Damit die Pellets bzw. Briketts gemäß der Erfindung nahe der Phasengrenze Schmelze/Schlacke in der Schmelze schwimmen, so dass sie unterhalb der Schlackenschicht chemisch mit den Metalloxiden der Schlacke reagieren können, ist ihre Dichte auf einen Wert von 3-4 t/m³ eingestellt. Erreicht wird dies durch ein entsprechend eingestelltes Mischungsverhältnis von Ballastmaterial und Reduktionsmittel. Das Balastmaterial besteht hierbei vorwiegend aus den die Rostfreistähle bildenden Elementen Eisen und Chrom, wobei nach einer vorteilhaften Ausgestaltung der Erfindung als Balastmaterial niedriglegierter Feinschrott mit einer Dichte von ca. 7 t/m³, fein geschreddert, als Eisenträger verwendet werden kann. Alternativ oder auch zusätzlich ist es möglich, als Balastmaterial eine Legierung der Zusammensetzung FeCrHC (High Carbon) mit einem Gehalt von ca. 8% C und 3% Si zu verwenden. Das diesen Ballastmaterialien zugemischte Reduktionsmittel Kohlenstoff bzw. Kohlenstoff und Silizium ist erfindungsgemäß Koks als Kohlenstoffträger und FeSi oder alternativ SiC als Siliziumträger. Die sich ergebende Zusammensetzung der Pellets bzw. Briketts wird neben der zu erreichenden Dichte zusätzlich durch das Verhältnis Kohlenstoff - FeSi bestimmt, wodurch die Zusammensetzung in folgenden Bereichen variieren kann
Koks > 60%
FeSi (70-75) > 20%
sonstiges Ballastmaterial >20%
Bindematerial <2%.

Um derartige Mischungen zu festen Pellets bzw. Briketts verpressen zu können, ist ein geeignetes Bindematerial erforderlich. Bewährt hat sich hier Melasse und Zement, alternativ können aber zur Verpressung auch Bitumen, Teerpech und Calciumhydrate eingesetzt werden.

Bei der Herstellung der Pellets bzw. Briketts ist es wichtig, dass die erzeugte Form und Größe sowie die stattgefundene Verdichtung an ihre spätere Verwendung angepasst ist. Gefordert wird hier, dass die Auflösungsdauer bei ihrer Reaktion mit den Inhaltstoffen der Schlacke, vor allem mit dem Chromoxid, an eine optimale Reduktion angepasst ist. Sie sollten deshalb thermisch stabil sein und nicht sofort nach ihrem Eintrag in den heißen Elektrolichtbogenofen zerfallen. Darüber hinaus sollten sie bezüglich ihrer Form, Größe und Festigkeit so beschaffen sein, dass ein pneumatischer Transport möglich ist, um ein einfaches Chargieren in den Elektrolichtbogenofen zu ermöglichen.

Die in den zur Reduktion des Chromoxids der Schlacke in den Elektrolichtbogenofen chargierten Mengen an Pellets bzw. Briketts sind weitgehend von der hergestellten Stahlsorte abhängig, wobei folgende Bereiche der spezifischen Verteilungsmengen an Pellets bzw. Briketts, bezogen auf 1 m² des Metallbades, in den Elektrolichtbogenofen gelten:
- Austenit-Schmelzen:: 1-4 kg/t/m² flüssiger Stahl
- Ferrit-Schmelzen:: 1,5-3 kg/t/m² flüssiger Stahl.

Die Chargiergeschwindigkeit der Pellet - bzw. Brikett - Zugabe ist dabei auf einen kontinuierlichen Wert von größer 5 kg/t/min. eingestellt, wobei die Pellets - bzw. Briketts in den ringförmigen Raum zwischen der seitlichen Ofenwand und dem in der Ofenmitte aus den Elektroden gebildeten Elektrodenkreis chargiert werden.

Weitere Einzelheiten und Vorteile der Erfindung werden nachfolgend an schematischen Zeichnungsfiguren eines Ausführungsbeispiels näher erläutert.

Es zeigen:
- Fig. 1: den Querschnitt eines Elektrolichtbogenofens mit Zugabevorrichtungen für Pellets bzw. Briketts,
- Fig. 2: eine vergrößerte Ansicht der von der Stahlschmelze mit der darüber schwimmenden Schlacke gebildeten Phasengrenze.

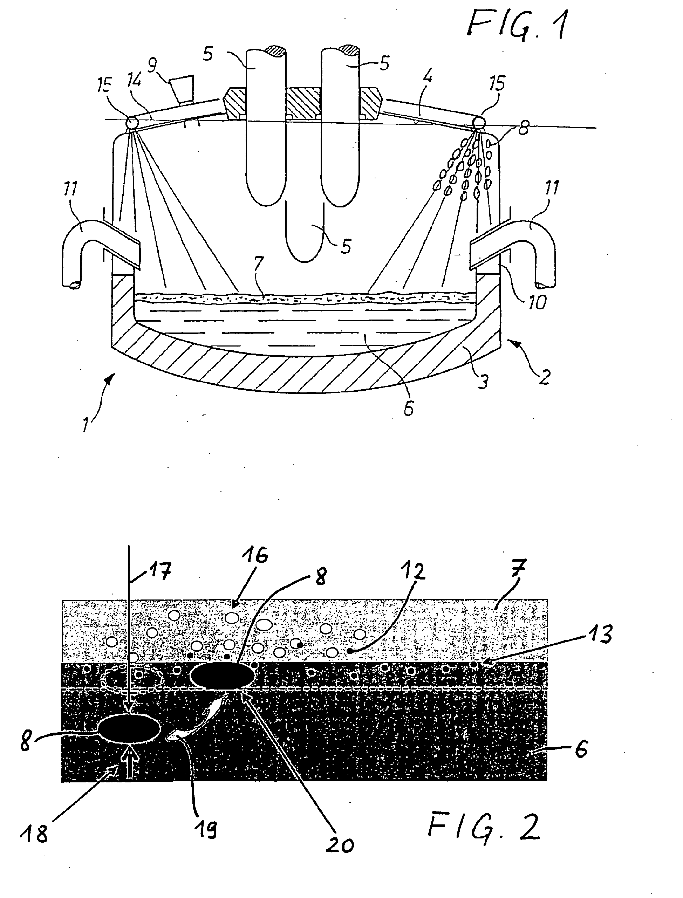

Der in Figur 1 dargestellte Elektrolichtbogenofen 1 besteht aus einem Ofengefäß 2 mit feuerfester Wandung 3 sowie einem Ofendeckel 4 sowie drei Elektroden 5, die von oben durch den Ofendeckel 4 in das Ofengefäß 2 geführt sind. Im unteren Teil des Ofengefäßes 2 befindet sich innerhalb der feuerfesten Wandung 3 eine Stahlschmelze 6 mit darüber liegender schmelzflüssiger Schlacke 7. Für die zur Reduktion der Schlacke in den ringförmigen Raum zwischen der seitlichen Ofenwand 10 und dem aus den Elektroden 5 gebildeten Elektrodenkreis zu chargierenden Pellets bzw. Briketts 8 bestehen folgende Möglichkeiten:
- Die Pellets bzw. Briketts 8 werden durch ein Gravitationsfördersystem über ein Deckelloch 9 in das Ofeninnere eingebracht.
- Die Pellets bzw. Briketts 8 werden durch ein pneumatisches Fördersystem mittels einer radial zum Ofendeckel 4 verlaufenden Ringleitung 14 mit Chargieröffnungen 15 in das Ofeninnere eingebracht.
- Die Pellets bzw. Briketts 8 werden pneumatisch oder mittels Gravitation durch in den Seitenwänden 10 des Ofens angeordnete Einlassvorrichtungen 11 in das Ofeninnere eingebracht.

In der Figur 2 ist in einem vergrößerten Maßstab der Bereich der von der Schlacke 7 und der Stahlschmelze 6 gebildeten Phasengrenze Schmelze/Schlacke 13 dargestellt. Mit der Pfeilrichtung 17 ist ein möglicher Weg eines in den Elektrolichtbogenofen 1 chargierten Briketts 8 eingezeichnet. Nach seinem Durchtritt durch die Schlackenschicht 7 befindet es sich innerhalb Schmelze 6, aber noch deutlich unterhalb der Phasengrenze Schmelze/Schlacke 13. Auf Grund des vorhandenen Dichteunterschiedes zur Schmelze 6 gelangt es dann durch seine Auftriebskraft 18 in einer möglichen Auftriebsbewegung 19, weiterhin in der Schmelze 6 schwimmend, in die angestrebte Endposition 20 direkt unterhalb der Phasengrenze Schmelze/Schlacke 13. In dieser unterhalb der Schlackenschicht 7 befindlichen Position 20 findet die gewünschte Reduktion mit den in der Schlacke enthaltenden Metalloxiden und insbesondere mit dem hier vorhandenen Chromoxid statt. Dabei werden Reaktionsgase 16, in der Hauptsache Kohlenmonoxid, freigesetzt, die als helle Punkte in der Schlackenschicht 7 eingezeichnet sind. Die nach den Reduktionsreaktionen der Briketts 8 mit der Schlacke 7 verbleibenden Brikettreste12 sind als schwarze Punkte eingezeichnet. Auf Grund ihrer nun veränderten Zusammensetzung können diese Brikettreste12 auch teilweise in der Schlacke 7 aufschwimmen.

### Bezugszeichenliste

- 1: Elektrolichtbogenofen
- 2: Ofengefäß
- 3: Feuerfeste Ofenwandung
- 4: Ofendeckel
- 5: Elektroden
- 6: Stahlschmelze
- 7: Schlacke
- 8: Pellets bzw. Briketts
- 9: Deckelloch
- 10: Seitenwände des Ofens
- 11: Einblasleitung
- 12: Pellets- bzw. Brikettsreste
- 13: Phasengrenze Schmelze/Schlacke
- 14: Ringleitung
- 15: Chargieröffnung
- 16: Reaktionsgase
- 17: Eintragsrichtung der Pellets bzw. Briketts in die Stahlschmelze
- 18: Auftriebskraft der Pellets bzw. Briketts in der Stahlschmelze
- 19: mögliche Auftriebsbewegungen der Pellets bzw. Briketts in der Stahlschmelze
- 20: Angestrebte Endposition der Pellets bzw. Briketts in der Stahlschmelze

## Patentansprüche

1. Verfahren zur Reduktion einer bei der Herstellung von Rostfreistahl in einem Elektrolichtbogenofen (1) auf der Stahlschmelze (6) befindlichen hochchromhaltigen Schlacke (7), bei dem der Schlacke (7) Formlinge wie Pellets bzw. Briketts (8) zu chargiert werden, deren Inhaltstoffe mit den Metalloxiden der Schlacke (7) reduzierend reagieren, wobei die in den Elektrolichtbogenofen (1) chargierten Pellets bzw. Briketts (8) aus einem definierten Gemisch aus einem Eisenträger als Balastmaterial, aus Kohlenstoff und Silizium als Reduktionsmittel sowie aus einem Bindematerial bestehen, und die Pellets bzw. Briketts (8) unter der Schlackenschicht chemisch mit den Metalloxiden der Schlacke (7), insbesondere mit dem enthaltenden Chromoxid, reduzierend reagieren, wobei die entstehenden Reaktionsgase (16) ein Schlackeaufschäumen unterstützen,
**dadurch gekennzeichnet,**
**dass** Balastmaterial vorwiegend aus den die Rostfreistähle bildenden Elementen Eisen und Chrom besteht und
als Balastmaterial eine Legierung der Zusammensetzung FeCrHC (High Carbon) mit einem Gehalt von ca. 8 % C und 3 % Si mit einer Dichte von ca. 7 t/m³, fein geschreddert, als Eisenträger verwendet wird.

2. Verfahren nach Anspruch 1,
**dadurch gekennzeichnet,**
**dass** die Dichte der Pellets bzw. Briketts (8) mit einem Wert von 3-4 t/m³ so eingestellt ist, dass die Pellets bzw. Briketts (8) nahe der Phasengrenze Schmelze/Schlacke (13) in der Schmelze (6) schwimmen.

3. Verfahren nach Anspruch 1 oder 2,
**dadurch gekennzeichnet,**
**dass** in den Pellets bzw. Briketts (8) der Kohlenstoff in Form von Koks und das Silizium in Form von FeSi oder alternativ als SiC vorliegt.

4. Verfahren nach einem oder mehreren der Ansprüche 1 bis 3,
**dadurch gekennzeichnet,**
**dass** die Zusammensetzung der Pellets bzw. Briketts (8) durch das Verhältnis Kohlenstoff (Koks) - FeSi bestimmt wird, wobei die Zusammensetzung in folgenden Bereichen variieren kann:
Koks > 60 %
FeSi (70-75) > 20 %
sonstiges Ballastmaterial > 20 %
Bindematerial > 2 %.

5. Verfahren nach Anspruch 4,
**dadurch gekennzeichnet,**
**dass** als Bindematerial Melasse und Zement und/oder Bitumen, Teerpech bzw. Caliciumhydrate eingesetzt werden.

6. Verfahren nach Anspruch 3, 4 oder 5,
**dadurch gekennzeichnet,**
**dass** die Verdichtung der Pellets bzw. Briketts (8) beim vorhergehenden Pressvorgang so vorgenommen wird, dass die Auflösungsdauer bei ihrer Reaktion mit den Inhaltstoffen der Schlacke (7) an eine optimale Reduktion vor allem des Chromoxids angepasst ist.

7. Verfahren nach Anspruch 3, 4, 5 oder 6,
**dadurch gekennzeichnet,**
**dass** die Pellets bzw. Briketts (8) bezüglich ihrer Form und Größe so ausgebildet sind, dass ein pneumatischer Transport möglich ist.

8. Verfahren nach einem oder mehreren der Ansprüche 1 bis 7,
**dadurch gekennzeichnet,**
**dass** abhängig von der hergestellten Stahlsorte folgende unterschiedliche spezifische Verteilungsmengen, bezogen auf 1 m² des Metallbades, in den Elektrolichtbogenofen (1) chargiert werden:
Austenit-Schmelzen: 1-4 kg/t/m² flüssiger Stahl
Ferrit-Schmelzen: 1,5-3 kg/t/m² flüssiger Stahl.

9. Verfahren nach Anspruch 8,
**dadurch gekennzeichnet,**
**dass** die Chargiergeschwindigkeit der Pellet - bzw. Brikett - Zugabe auf einen kontinuierlichen Wert von größer 5 kg/t/min. eingestellt ist.

10. Verfahren nach Anspruch 8 oder 9,
**dadurch gekennzeichnet,**
**dass** die Pellet - bzw. Brikett - Zugabe in den ringförmigen Raum zwischen der seitlichen Ofenwand (10) und dem aus den Elektroden (5) gebildeten Elektrodenkreis erfolgt.

## Claims

1. Method for the reduction of a high-chromium-content slag (7) on the steel melt (6) during producing of stainless steel in an electric arc furnace (1), in which press-moulded bodies such as pellets or briquettes (8), the constituents of which react with the metal oxides of the slag (7) with a reducing action, are charged additionally into the slag (7), wherein the pellets or briquettes (8) charged into the electric arc furnace (1) consist of a defined mixture of an iron carrier as ballast material, carbon and silicon as reducing agent and a binder, and the pellets or briquettes (8) under the slag layer chemically react with metal oxides of the slag (7), particularly with the chromium oxide present therein, with a reducing action, wherein the resulting reaction gases (16) assist foaming of the slag, **characterised in that** the ballast material consists primarily of the elements iron and chromium forming the stainless steels and as ballast material an alloy of the composition FeCrHC (high carbon) with a content of approximately 8% C and 3% Si with a density of approximately 7 t/m³ in finely shredded form is used as iron carrier.

2. Method according to claim 1, **characterised in that** the density of the pellets or briquettes (8) is set to a value of 3 - 4 t/m³ so that the pellets or briquettes (8) float in the melt (6) near the phase boundary melt/slag (13).

3. Method according to claim 1 or 2, **characterised in that** the carbon is present in the pellets or briquettes (8) in the form of coke and the silicon is present in the form of FeSi or alternatively as SiC.

4. Method according to one or more of claims 1 to 3, **characterised in that** the composition of the pellets or briquettes (8) is determined by the ratio of carbon (coke) to FeSi, wherein the composition can vary in the following ranges:
coke > 60%
FeSi (70 - 75) > 20%
other ballast material > 20%
binder > 2%.

5. Method according to claim 4, **characterised in that** molasses and cement and/or bitumen, tar pitch or calcium hydrates are used as binder.

6. Method according to claim 3, 4 or 5, **characterised in that** the compaction of the pellets or briquettes (8) in the preceding press-moulding process is so undertaken that the dissolution time in the reaction thereof with the constituents of the slag (7) is matched to an optimum reduction of, primarily, the chromium oxide.

7. Method according to claim 3, 4, 5 or 6, **characterised in that** the pellets or briquettes (8) are so constructed with respect to the shape and size thereof that pneumatic transport is possible.

8. Method according to one of more of claims 1 to 7, **characterised in that** depending on the grades of steel produced the following different specific distribution quantities referred to 1 m² of the metal bath are charged into the electric arc furnace (1):
austenite melts: 1 - 4 kglt/m² of liquid steel
ferrite melts: 1.5 - 3 kg/t/m² of liquid steel.

9. Method according to claim 8, **characterised in that** the charging rate of the pellet or briquette addition is set to a continuous value greater than 5 kg/t/min.

10. Method according to claim 8 or 9, **characterised in that** the pellet or briquette addition is carried out in the annular space between the lateral furnace wall (10) and the electrode circle formed from the electrodes (5).

## Revendications

1. Procédé pour la réduction d'un laitier (7) à haute teneur en chrome disposé sur l'acier liquide (6) lors de la fabrication d'acier inoxydable dans un four à arc électrique (1), dans lequel on ajoute au laitier (7) par chargement des éléments moulés tels que des granulés respectivement des briquettes (8), dont les constituants entrent en réaction par réduction avec les oxydes métalliques du laitier (7), les granulés respectivement les briquettes (8) chargés dans le four à arc électrique (1) étant constitués par un mélange défini d'un porteur de fer à titre de matière de ballast, de carbone et de silicium à titre d'agents de réduction et d'une matière faisant office de liant, et les granulés respectivement les briquettes (8), en dessous de la couche de laitier, entrant dans une réaction chimique de réduction avec les oxydes métalliques du laitier (7), en particulier avec l'oxyde de chrome qu'il contient, les gaz de la réaction (16) que l'on obtient contribuant à la transformation du laitier en mousse, **caractérisée en ce que** la matière de ballast est constituée à titre principal par le fer et le chrome élémentaires formant les aciers inoxydables, et **en ce qu'**on utilise comme matière de ballast, un alliage de composition FeCrHC (High Carbon) possédant une teneur en carbone d'environ 8 % et en silicium de 3 %, avec une densité d'environ 7 t/m³, finement déchiqueté, pour faire office de porteur de fer.

2. Procédé selon la revendication 1, **caractérisé en ce qu'**on règle la densité des granulés respectivement des briquettes (8) avec une valeur de 3 à 4 t/m³ de telle sorte que les granulés, respectivement les briquettes (8) flottent à proximité de l'interface masse fondue/laitier (13) dans la masse fondue (6).

3. Procédé selon la revendication 1 ou 2, **caractérisé en ce que** le carbone est présent, dans les granulés respectivement les briquettes (8) sous la forme de coke et le silicium est présent sous la forme de FeSi ou en variante sous la forme de SiC.

4. Procédé selon une ou plusieurs des revendications 1 à 3, **caractérisé en ce qu'**on détermine la composition des granulés respectivement des briquettes (8) en se basant sur le rapport carbone (coke) - FeSi, la composition pouvant varier dans les plages reprises ci-après :
coke > 60 % ;
FeSi (70 - 75) > 20 % ;
autre matière de ballast > 20 %;
matière faisant office de liant > 2 %.

5. Procédé selon la revendication 4, **caractérisé en ce qu'**on met en oeuvre, à titre de matière faisant office de liant, de la mélasse et du ciment et/ou du bitume, du brai respectivement des hydrates de calcium.

6. Procédé selon la revendication 3, 4 ou 5, **caractérisé en ce qu'**on procède à la densification des granulés respectivement des briquettes (8) lors du processus de compression préalable, de telle sorte que la durée de décomposition lors de leur réaction avec les constituants du laitier (7) est adaptée à une réduction optimale avant tout de l'oxyde de chrome.

7. Procédé selon la revendication 3, 4, 5 ou 6, **caractérisé en ce que** les granulés respectivement les briquettes (8) sont réalisés, en ce qui concerne leur forme et leur dimension, de façon à permettre un transport pneumatique.

8. Procédé selon une ou plusieurs des revendications 1 à 7, **caractérisé en ce qu'**on charge, en fonction des types d'aciers fabriqués, les quantités de distribution spécifiques différentes suivantes, rapportées à 1 m² du bain métallique, dans le four à arc électrique (1) :
masses fondues austénitiques : 1-4 kg/t/ m² d'acier liquide ;
masses fondues ferritiques : 1,5-3 kg/t/ m² d'acier liquide.

9. Procédé selon la revendication 8, **caractérisé en ce que** la vitesse de chargement de l'addition des granulés respectivement des briquettes est réglée à une valeur continue supérieure à 5 kg/t/min.

10. Procédé selon la revendication 8 ou 9, **caractérisé en ce que** l'addition des granulés respectivement des briquettes a lieu dans l'espace annulaire ménagé entre la paroi latérale (10) du four et le cercle d'électrodes formé par les électrodes (5).
